# EUROPEAN PATENT APPLICATION

(11) **EP 3 001 317 A1**
(43) Date of publication of application: **30.03.2016**
(21) Application number: 14186677.2
(22) Date of filing: 26.09.2014
(51) Int. Cl.: G06F 11/07

(54) **Alarm correlation according to dependencies between entities of the managed data processing system**

(71) Applicant: ALCATEL LUCENT, 92100 Boulogne-Billancourt (FR)
(72) Inventor: Aghasaryan, Armen, 91620 Nozay (FR); Bouzid, Makram, 91620 Nozay (FR); Kostadinov, Dimitre Davidov, 91620 Nozay (FR)
(74) Representative: Novagraaf Technologies

(57) **Abstract**

This invention relates to an alarm management system for a data processing system (DPS) comprising:
- an alarm generation function (AGF) for generating an alarm (a) in case of detection of alarm conditions at an entity of the data processing system (DPS), and attaching to said alarm dependency attributes representative of dependencies between this entity and other entities of the data processing system,
- an alarm correlation system (ACS) for correlating received alarms (a) according to dependency attributes attached to them, so as to transmit root-cause information (rci) to an alarm recipient (AR);

said alarm generation function (AGF) being adapted for forwarding the alarm to the alarm correlation system (ACS).

## Description

### FIELD OF THE INVENTION

The invention relates to alarm management for a data processing system, and especially to the determination of the root cause of a flow of alarms. The invention applies particularly well to complex systems like cloud infrastructures, especially multi-tenant cloud infrastructures.

### BACKGROUND OF THE INVENTION

Data processing system like cloud infrastructures and more specifically multi-tenant cloud infrastructure are complex and dynamic.

Surveillance of such systems is challenged by the high volume of measurements, data and alarms to be processed. Often, a single fault or problem may produce multiple alarms in cascade, and a given alarm can be caused by different faults: this creates ambiguities in the interpretation of alarms by the human operator, and also a possibly-overwhelming number of alarms presented to him.

However, it may be crucial to react quickly to alarms. A delayed understanding of the faults negatively impacts the customer satisfaction. Accordingly, a timely identification of the origins of faults and problems is an essential feature for an efficient management of a cloud infrastructure.

Some systems and mechanisms exist for determining automatically the root cause of a flow of alarms coming from a data processing system.

Many of the root cause analysis (RCA) approaches rely on expert system based on a set of statically defined rules. However, cloud infrastructures are typically dynamic, wherein the dependencies between participating entities or resources (virtual machines, hosts, etc.) are set according to real-time assignments. Accordingly, such an approach is not possible.

Some more sophisticated approaches consists in learning the rules from the monitored system, instead of having them statically fixed at beginning, but again the resulting rule set may become soon obsolete because of the dynamic nature of the monitored system. The rules then need to be updated permanently, which may be a time consuming task.

### SUMMARY OF THE INVENTION

The object of the present invention is to alleviate at least partly the above mentioned drawbacks.

This object is achieved with a Method for managing alarms for a data processing system, comprising:
- generating an alarm in case of detection of alarm conditions at an entity of said data processing system;
- attaching to said alarm dependency attributes representative of dependencies between said entity and other entities of said data processing system;
- forwarding said alarm to an alarm correlation system;
- correlating at said alarm correlation system received alarms according to dependency attributes attached to them, so as to transmit root-cause information to an alarm recipient.

Preferred embodiments comprise one or more of the following features, which can be taken separately or together, either in partial combination or in full combination:
- said dependency attributes are determined in collaboration with a local topology provider;
- said dependency attributes comprise vertical dependency attributes corresponding to containment relationships.
- said dependency attributes comprise horizontal dependency attributes corresponding to applicative relationships.
- said correlating is performed according to a first phase wherein a correlation is done on horizontal dependency attributes, and a second phase wherein a correlation is done on horizontal dependency attributes.

Another aspect of the invention concerns a computer program product comprising computer-executable instructions for performing the method previously described, when run onto a data processing unit.

Another aspect of the invention concerns an alarm management system for a data processing system comprising:
- an alarm generation function for generating an alarm in case of detection of alarm conditions at an entity of said data processing system, and attaching to said alarm dependency attributes representative of dependencies between said entity and other entities of said data processing system,
- an alarm correlation system for correlating received alarms according to dependency attributes attached to them, so as to transmit root-cause information to an alarm recipient;
- said alarm generation function being adapted for forwarding said alarm to said alarm correlation system.

Preferred embodiments comprise one or more of the following features, which can be taken separately or together, either in partial combination or in full combination:
- the alarm management system further comprises a local topology provider to determine dependencies between entities of said data processing system, and wherein said alarm correlation system is adapted to determine said dependency attributes in collaboration with said local topology provider.
- said dependency attributes comprise vertical dependency attributes corresponding to containment relationships.
- said dependency attributes comprise horizontal dependency attributes corresponding to applicative relationships.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows a schematic embodiment of an alarm management system according to the invention
Fig. 2 illustrates vertical and horizontal dependencies in an example of deployments of virtual machines on hosts.
Fig. 3 shows the result of such a mapping with the values of the example depicted on FIG. 2
Fig. 4 shows a streaming architecture for alarm correlation, according to an embodiment of the invention.

### DETAILED DESCRIPTION OF THE INVENTION

According to embodiments of the invention, large and complex data processing systems like multi-tenant cloud infrastructures are addressed.

A multi-tenant cloud infrastructure allows mutualizing the resources among several clients or "tenants". Each tenant can use the cloud infrastructure in an independent way of the others.

According to the invention, an alarm management system is associated to the data processing system, aiming at determining root cause information from measurements and notification received from the entities of the system and/or from a measurement function attached to it.

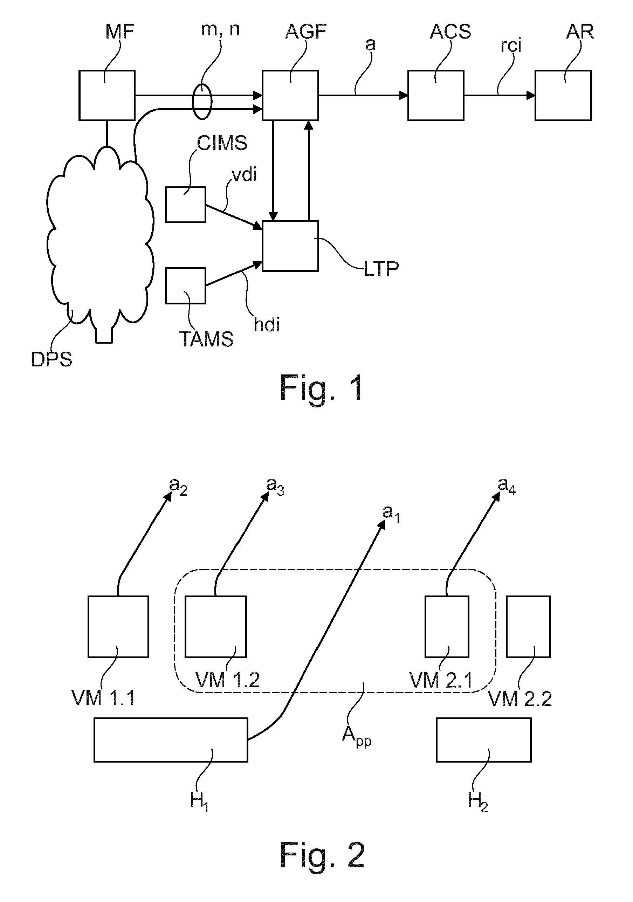

FIG. 1 illustrates a possible embodiment for an alarm management system.

The alarm management system comprise an alarm generation function AGF, which can receive measurements m and notification n from the data processing system DPS and/or from a measurement function MF associated with the data processing system DPS.

Some entities within the data processing system can generate notification on a periodic basis or when certain conditions are met. Furthermore, a measurement function MF can receive raw data from the data processing system DPS, potentially by interrogating the system. It provides then measurements m to the alarm generation function AGF. These aspects are typical of an alarm management system and accessible to the man skilled in the art, and, for this reason, won't be further detailed.

The alarm generation function AGF is adapted for generating an alarm a in case of detection of alarm conditions at an entity of the data processing system DPS. The entities can be applications, virtual machines but also hardware resources like the hosts themselves (physical machines on which the virtual machines are deployed), or their subparts (microprocessors, hard discs, networking means...).

The alarm conditions can consist in the reception of a certain notification from an entity, but also can be triggered when a measured value of a given parameter crosses a predefined threshold or deviate from a predefined profile.

The alarm a forwarded to the alarm correlation system ACS can contain information about the conditions which triggered this alarm, like the value of a measured parameter, or an identifier of the entity.

Accordingly the alarm forwarded by the alarm generation function AFG can contain several fields, e.g. the identity of the entity which triggered the alarm. According to an embodiment of the invention, it can be attached with the notation <target_resource=id_entity>.

In addition, according to the invention, some dependency attributes are attached to the alarm a. These dependency attributes are representative of dependencies between the entity which triggered the alarm and other entities of the data processing system DPS.

In many data processing systems, entities are linked together to provide a given service. In dynamic systems, like a cloud infrastructure, these links are established when required, in a dynamic way. According to the invention, the information related to these dynamic links, called here "dependencies" are useful to better correlate the alarms and this is the reason why dependency attributes are attached to the alarms a at the alarm generation function AGF.

These dependencies can be divided into vertical and horizontal dependencies.

FIG. 2 illustrates both types of dependencies. It depicts 2 hosts, H1, H2. On each host are collocated 2 virtual machines, VM1.1, VM1.2 and VM2.1, VM2.2 respectively.

The virtual machines VM1.2 and VM2.1 belong to a same application App. For instance, the virtual machine VM1.2 is running a database, while the virtual machine VM2.1 is an application server making regular requests to this database.

The vertical dependencies correspond to containment relationships, i.e. the deployment of a given virtual machine onto a particular host. In the example depicted on FIG. 2, the virtual machine VM 1.1 depends vertically on the host H1. Similarly, the virtual machine VM2.1 depends vertically on the host H2. The dependence relationship is oriented: the host H1 supports the virtual machines VM1.1 and VM1.2: these virtual machines can then have "vertical dependency information" indicating that they are supported by the host H1.

The horizontal dependencies correspond to applicative relationships. Like in the example depicted on the figure, two virtual machines beholding to a same application App are in horizontal dependence. Similarly, two applications beholding to a same tenant of a multi-tenant infrastructure are in horizontal dependence.

The dependency can also be oriented like for the vertical dependency. The virtual machine VM2.1 is supported by the virtual machine VM1.2, an accordingly the virtual machine VM2.1 can have "horizontal dependency information" indicating that it is supported by the virtual machine VM1.2.

The dependency information can be determined in collaboration with a local topology provider LTP.

This local topology provider LTP can determine the dependency information differently regarding whether it is vertical or horizontal dependencies.

The vertical dependency information vdi can be retrieved from a cloud infrastructure management system CIMS, such as Openstack's Nova. This management component is used for mapping the hosts and their physical subparts (CPU, disk, network interfaces...) to the corresponding virtual machine resources. It is accordingly knowledgeable about the host-to-VM containment relationships and can provide this knowledge on request of the local topology provider LTP.

The horizontal dependency information hdi depends on the tenants. Therefore, the local topology provider LTP should retrieve it from a tenant application management system TAMS, within each tenant domain individually.

As the data processing system DPS is dynamic, the horizontal and vertical dependencies change along the time, and the horizontal and vertical dependency information should then be determined at each time an alarm is to be generated.

Then, when the alarm generation function AGF generates an alarm a₁, a₂, a₃, a₄, it can:
- Determine which entity it is triggered from;
- Query the local topology provider LTP, to learn about horizontal and vertical dependencies for this entity;
- Attach dependency attributes to the generated alarm, according to the horizontal and vertical dependencies retrieved from the local topology provider LTP.

Turning back to FIG. 2, the arrows illustrate information (notification or measurements) which will trigger the alarms a₁, a₂, a₃, a₄ at the alarm generation function AGF (not depicted).

The alarm a₁ is triggered by the entity H1, which is a host. The host H1 is in vertical dependency with nothing and in horizontal dependency with nothing.

Accordingly, the attributes for the alarm a₁ can be:
<target_resource=H1>
<supported_by = null >

According to an embodiment of the invention, the vertical dependency attributes and the horizontal dependency attributes are split over 2 separated attribute field. For example, the attributes for the alarm a₁ can be:
<target_resource=H1>
<supported_by_horizontally = null>
<supported_by_vertically = null >

The alarm a₂ is triggered by the entity VM1.1, which is a virtual machine. The virtual machine VM1.1 is in vertical dependency with the host H1. Accordingly, the attributes for the alarm a₂ can be:
<target_resource=VM1.1>
<supported_by = H1>

According to an embodiment of the invention, the vertical dependency attributes and the horizontal dependency attributes are split over 2 separated attribute field. For example, the attributes for the alarm a₂ can be:
<target_resource=VM1.1>
<supported_by_horizontally = null>
<supported_by_vertically = H1>

The alarm a₃ is triggered by the entity VM1.2, which is a virtual machine. The virtual machine VM1.2 is in vertical dependency with the host H1. Accordingly, the attributes for the alarm a₃ can be:
<target_resource=VM 1.2>
<supported_by = H1>

According to an embodiment of the invention, the vertical dependency attributes and the horizontal dependency attributes are split over 2 separated attribute field. For example, the attributes for the alarm a₃ can be:
<target_resource=VM 1.2>
<supported_by_horizontally = null>
<supported_by_vertically = H1>

The alarm a₄ is triggered by the entity VM2.1, which is a virtual machine. The virtual machine VM2.1 is in vertical dependency with the host H2, and in horizontal dependency with the virtual machine VM1.2. Accordingly, the attributes for the alarm a₄ can be:
<target_resource=VM2.1>
<supported_by = H2, VM1.2 >

According to an embodiment of the invention, the vertical dependency attributes and the horizontal dependency attributes are split over 2 separated attribute field. For example, the attributes for the alarm a₂ can be:
<target_resource=VM2.1>
<supported_by_horizontally = VM1.2>
<supported_by_vertically = H2 >

An actual case for such a set of alarms can be:
a₁: CPU overloaded.
a₂: CPU starving: the virtual machine VM1.1 experiences problems due to lack of CPU resources
a₃: CPU starving: the virtual machine VM1.2 experiences problems due to lack of CPU resources
a₄: excessive response delay: the virtual machine VM2.1 experiences problems due to excessive response time from the virtual machine VM1.2, with which it has many interactions since both belongs to the same application App.

The alarms a₁, a₂, a₃, a₄ generated by the alarm generation function AGF are then forwarded to the alarm correlation system ACS.

The alarm correlation system ACS is adapted for correlating received alarms according to dependency attributes attached to them, so as to transmit root-cause information rci to an alarm recipient AR. The alarm recipient AR can be a surveillance application adapted to display root cause information rci on a screen, for instance. It can also be a management system adapted to automatically react and trigger corrective actions onto the data processing system DPS.

The actual correlation can be performed according to various schemes.

The alarm correlation system ACS can be a centralized system implementing an alarm correlation algorithm for matching values of the attributes attached to the received alarms. More precisely, the algorithm tries to match pairs of "target_resource" and "supported_by" values

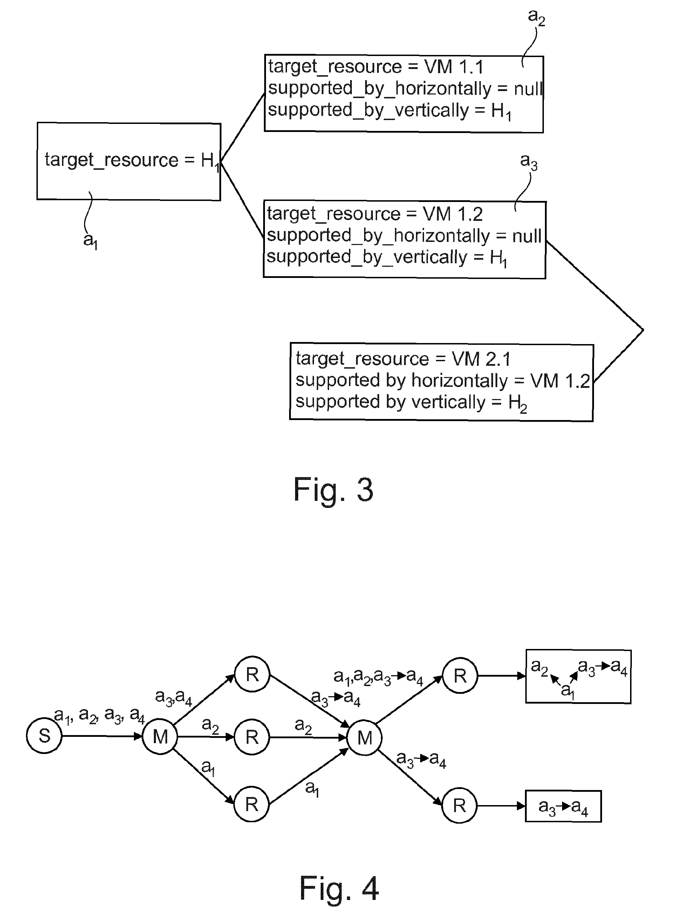

FIG. 3 shows the result of such a mapping with the values of the example depicted on FIG. 2. From these mappings, the root cause can be determined as being associated with the alarm a₁ and triggered by the host H1. These root cause and any other information can be transmitted as root cause information rci to the alarm recipient AR.

Another embodiment of the invention consists in having a decentralized alarm correlation system ACS.

If the global topology of the cloud infrastructure is decomposed according to geographical zones, or according to a definition of availability zones, then the alarm correlation system ACS can be split into several decentralized modules, each responsible for such a zone.

First, each of the decentralized alarm correlation module receives alarms coming from its own zone and correlates them as much as possible by trying to perform matching of "target_resource" and "supported_by" attributes like previously described, for instance.

Some of these values may however refer to a resource (i.e. entity) outside of the zone, and is thus impossible to match by the zone-specific alarm correlation module. This indicates that there is an inter-zone dependency. This can typically happen when interdependent application instances (e.g. the virtual machines running an application server and the virtual machine running the database used by this application server are located in different zones, e.g. different data centers).

Then, in order to build the entire correlation pattern, the intra-zone sub-graphs need to be communicated between the decentralized correlation modules. By exchanging information, the full picture can be deduced and the root cause information rci determined and sent to a (or several) alarm recipient AR.

This decentralized approach can be refined further in order to address the issue of determining the optimal number of zones and decentralized alarm correlation modules.

A first idea consists in performing the correlation in two phases:
- a first phase consists in having a correlation done on horizontal dependency attributes, and
- a second phase consists in having a correlation done on horizontal dependency attributes.

A second idea consists in having correlations performed in a streaming platform formed by a pipeline of components, namely "mapper" (M) components routing the incoming alarms according to criteria, and "reducer" (R) components for performing simple correlations. Such a streaming architecture is depicted on FIG. 4.

The criteria are based on supplementary attributes attached to the alarms:
- <grouped_by_horizontally=app_id> provides an identifier for horizontal grouping according to the application. Different application instances involved in the given application logic shares this identifier and can be expected to have a horizontally correlated behavior. So, they need to be gathered together at the same processing instance ("reducer" R) during the first phase.
- <grouped_by_vertically=host_id> provides an identifier for vertical grouping according to the physical host. Various entity located at the same physical host can be potentially correlated vertically and they need therefore to be gathered at a same processing instance ("reducer" R) during the second phase

Turning back to the example depicted on FIG. 2, we can summarize the values for the various attributes for the alarms a₁, a₂, a₃, a₄ as follows:
For the alarm a₁:
   <target_resource=H1>
   <grouped_by_horizontally = null>
   <grouped_by_vertically = H1 >
   <supported_by_horizontally = null>
   <supported_by_vertically = null >
For the alarm a₂:
   <target_resource=VM1.1>
   <grouped_by_horizontally = App2> (reference not depicted)
   <grouped_by_vertically = H1 >
   <supported_by_horizontally = null>
   <supported_by_vertically = H1>
For the alarm a₃:
   <target_resource=VM 1.2>
   <grouped_by_horizontally = App>
   <grouped_by_vertically = H1>
   <supported_by_horizontally = null>
   <supported_by_vertically = H1>
For the alarm a₄:
   <target_resource=VM2.1>
   <grouped_by_horizontally = App>
   <grouped_by_vertically = H2 >
   <supported_by_horizontally = VM1.2>
   <supported_by_vertically = H2>

Then, the 2-phase correlation process can exploit these additional dependency attributes as depicted on FIG. 4

The module S is a streamer, providing alarms as a flow toward one or several mapper M. The mapper of the first layer, corresponding the first phase, routes the alarms according to the <grouped_by_horizontally> dependency attribute.

The alarms a₃, a₄ have an attribute value equal to "App" and are therefore sent to a same Reducer R.

The alarm a₂ has an attribute value equal to « App2 » and is sent to a second reducer R.

The alarm a₁ has an attribute value equal to null, and is then to a third reducer R.

Each reducer then receive all the alarms corresponding to a same "group", and is thus able to determine the horizontal correlations. These correlations can be done b simple entity matching as explained previously. In this example, a correlation can be established between the alarms a₃ and a₄. This correlation is sent to the next layer (as a relationship a₃->a₄ in the figure), as well as the un-correlated alarms a₁, a₂.

At the second layer, a mapper M routes the alarms according to the <grouped_by_vertically> attribute to the reducers R.

The alarms a₁, a₂ is sent to a first reducer corresponding to the attribute value of "H1".

The correlated alarms a₃->a₄ comprise both values, "H1" and "H2", and is therefore sent to both reducers.

The reducers R perform the correlation as previously described, according to vertical dependency attributes <supported_by_vertically>.

As a result, both reducers can determine a dependency graphs.

Among both result, a selection can be done, for example by differentiating them by a score. A score can be computed according to the number of correlated alarms, for instance.

This scheme forms the root cause information can be forwarded to the alarm recipient AR.

The invention has been described with reference to preferred embodiments. However, many variations are possible within the scope of the invention.

## Claims

1. Method for managing alarms for a data processing system (DPS), comprising:
- Generating an alarm (a) in case of detection of alarm conditions at an entity of said data processing system (DPS);
- Attaching to said alarm dependency attributes representative of dependencies between said entity and other entities of said data processing system;
- Forwarding said alarm to an alarm correlation system (ACS);
- Correlating at said alarm correlation system received alarms according to dependency attributes attached to them, so as to transmit root-cause information (rci) to an alarm recipient (AR).

2. Method according to the previous claim, wherein dependency attributes are determined in collaboration with a local topology provider (LTP).

3. Method according to claim 1 or 2, wherein said dependency attributes comprise vertical dependency attributes corresponding to containment relationships.

4. Method according to any of the previous claims, wherein said dependency attributes comprise horizontal dependency attributes corresponding to applicative relationships.

5. Method according to the previous claim, wherein said correlating is performed according to a first phase wherein a correlation is done on horizontal dependency attributes, and a second phase wherein a correlation is done on horizontal dependency attributes

6. Computer program product comprising computer-executable instructions for performing the method according to any of the previous claims, when run onto a data processing unit.

7. Alarm management system for a data processing system (DPS) comprising :
- an alarm generation function (AGF) for generating an alarm (a) in case of detection of alarm conditions at an entity of said data processing system (DPS), and attaching to said alarm dependency attributes representative of dependencies between said entity and other entities of said data processing system,
- an alarm correlation system (ACS) for correlating received alarms (a) according to dependency attributes attached to them, so as to transmit root-cause information (rci) to an alarm recipient (AR);
said alarm generation function (AGF) being adapted for forwarding said alarm to said alarm correlation system (ACS).

8. Alarm management system according to the previous claim, further comprising a local topology provider (LTP) to determine dependencies between entities of said data processing system, and wherein said alarm correlation system (ACS) is adapted to determine said dependency attributes in collaboration with said local topology provider (LTP).

9. Alarm management system according to claim 7 or 8, wherein said dependency attributes comprise vertical dependency attributes corresponding to containment relationships.

10. Alarm management system according to any of claims 7 to 9, wherein said dependency attributes comprise horizontal dependency attributes corresponding to applicative relationships.

## Amended claims

### Amended claims in accordance with Rule 137(2) EPC.

1. Method for managing alarms for a data processing system (DPS), comprising:
- Generating an alarm (a) in case of detection of alarm conditions at an entity of said data processing system (DPS);
- Attaching to said alarm dependency attributes representative of dependencies between said entity and other entities of said data processing system;
- Forwarding said alarm to an alarm correlation system (ACS);
- Correlating at said alarm correlation system received alarms according to dependency attributes attached to them, so as to transmit root-cause information (rci) to an alarm recipient (AR).

2. Method according to the previous claim, wherein dependency attributes are determined by a local topology provider (LTP).

3. Method according to claim 1 or 2, wherein said dependency attributes comprise vertical dependency attributes corresponding to containment relationships.

4. Method according to any of the previous claims, wherein said dependency attributes comprise horizontal dependency attributes corresponding to applicative relationships.

5. Method according to the previous claim, wherein said correlating is performed according to a first phase wherein a correlation is done on horizontal dependency attributes, and a second phase wherein a correlation is done on vertical dependency attributes

6. Computer program product comprising computer-executable instructions for performing the method according to any of the previous claims, when run onto a data processing unit.

7. Alarm management system for a data processing system (DPS) comprising :
- an alarm generation function (AGF) for generating an alarm (a) in case of detection of alarm conditions at an entity of said data processing system (DPS), and attaching to said alarm dependency attributes representative of dependencies between said entity and other entities of said data processing system,
- an alarm correlation system (ACS) for correlating received alarms (a) according to dependency attributes attached to them, so as to transmit root-cause information (rci) to an alarm recipient (AR); said alarm generation function (AGF) being adapted for forwarding said alarm to said alarm correlation system (ACS).

8. Alarm management system according to the previous claim, further comprising a local topology provider (LTP) to determine dependencies between entities of said data processing system, and wherein said alarm correlation system (ACS) is adapted to determine said dependency attributes in collaboration with said local topology provider (LTP).

9. Alarm management system according to claim 7 or 8, wherein said dependency attributes comprise vertical dependency attributes corresponding to containment relationships.

10. Alarm management system according to any of claims 7 to 9, wherein said dependency attributes comprise horizontal dependency attributes corresponding to applicative relationships.
